(19) Europäisches Patentamt
European Patent Office
Office européen des brevets

(11) **EP 3 555 585 B1**

(12) **FASCICULE DE BREVET EUROPEEN**

(45) Date de publication et mention
de la délivrance du brevet:
**10.05.2023   Bulletin 2023/19**

(21) Numéro de dépôt: **17828875.9**

(22) Date de dépôt: **15.12.2017**

(51) Classification Internationale des Brevets (IPC):
**G01M 5/00** *(2006.01)*   **G01N 29/50** *(2006.01)*
**G01N 29/14** *(2006.01)*   **G01M 11/08** *(2006.01)*

(52) Classification Coopérative des Brevets (CPC):
**G01M 5/0025; G01M 5/0008; G01M 5/0016;**
**G01M 5/0066; G01M 5/0091; G01M 11/083;**
**G01N 29/14; G01N 29/50;** G01N 2291/0231;
G01N 2291/0258; G01N 2291/0423;
G01N 2291/0425; G01N 2291/2694

(86) Numéro de dépôt international:
**PCT/EP2017/083000**

(87) Numéro de publication internationale:
**WO 2018/109159 (21.06.2018 Gazette 2018/25)**

(54) **PROCEDE ET SYSTEME DE CONTROLE DE SANTE INTEGRE D'UNE STRUCTURE MECANIQUE PAR ONDES ELASTIQUES DIFFUSES**

VERFAHREN UND SYSTEM ZUR STEUERUNG DER INTEGRIERTEN GESUNDHEIT EINER MECHANISCHEN STRUKTUR DURCH DIFFUSE ELASTISCHE WELLEN

METHOD AND SYSTEM FOR CONTROLLING THE INTEGRATED HEALTH OF A MECHANICAL STRUCTURE BY DIFFUSE ELASTIC WAVES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2016   FR 1662485**

(43) Date de publication de la demande:
**23.10.2019   Bulletin 2019/43**

(73) Titulaire: **Commissariat à l'Énergie Atomique et aux Énergies Alternatives 75015 Paris (FR)**

(72) Inventeurs:
• **DRUET, Tom**
  **75015 Paris (FR)**
• **CHAPUIS, Bastien**
  **78220 Viroflay (FR)**
• **MOULIN, Emmanuel**
  **59770 Marly (FR)**

(74) Mandataire: **Atout PI Laplace Immeuble "Visium" 22, avenue Aristide Briand 94117 Arcueil Cedex (FR)**

(56) Documents cités:
**EP-A2- 2 728 348        WO-A1-2015/119498**
**US-A1- 2010 079 258**

• **ERIC LAROSE ET AL: "Reconstruction of Rayleigh-Lamb dispersion spectrum based on noise obtained from an air-jet forcing", ARXIV.ORG, CORNELL UNIVERSITY LIBRARY, 201 OLIN LIBRARY CORNELL UNIVERSITY ITHACA, NY 14853, 1 octobre 2007 (2007-10-01), XP080304225, DOI: 10.1121/1.2799913 cité dans la demande**

- SABRA KARIM ET AL: "Using cross correlations of turbulent flow-induced ambient vibrations to estimate the structural impulse response. Application to structural health monitoring", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 121, no. 4, 8 mai 2007 (2007-05-08), pages 1987-1995, XP012096520, ISSN: 0001-4966, DOI: 10.1121/1.2710463 cité dans la demande

## Description

L'invention porte sur un procédé de contrôle non destructif d'une structure mécanique, et plus particulièrement d'un procédé de contrôle de santé intégré d'une telle structure. Elle porte également sur un système permettant la mise en oeuvre d'un tel procédé.

L'invention s'applique au contrôle non destructif de toute structure mécanique susceptible de guider des ondes élastiques. Il peut s'agir notamment d'une structure de type poutre ou tube (réalisant un guidage à une dimension) ou bien plaque ou coque (réalisant un guidage à deux dimensions). Il peut également s'agir d'une structure massive dont la surface est suffisamment régulière pour permettre de guider des ondes de Rayleigh.

On entend par « poutre » un objet dont la longueur est grande (par exemple supérieure d'au moins un facteur dix) par rapport aux dimensions transverses. Les poutres sont souvent utilisées comme éléments structurels, mais des arbres de transmission, des rails voire des câbles peuvent également être considérés des éléments de type poutre.

On entend par « plaque » une structure mécanique délimitée par deux surfaces (« peaux ») approximativement parallèles et présentant une épaisseur beaucoup plus faible (au moins d'un facteur dix) que la plus petite dimension latérale. Une « coque » est une plaque présentant une courbure significative. Plaques et coques sont très utilisées en génie mécanique et en génie civil. Par exemple, le tablier d'un pont, une dalle en béton, une voûte, le fuselage ou les ailes d'un avion, une cuve... peuvent être modélisés par des plaques ou coques.

Au cours de la durée de vie d'une structure, les matériaux dont elle est faite vieillissent. Il est donc important de contrôler l'état de santé de ces matériaux pour être certain que la structure peut encore remplir son rôle. Le contrôle de l'intégrité des structures (ouvrages d'art, avions, pipelines,...) au cours de leur vie se fait généralement lors d'opérations de maintenances, avec intervention humaine : pour cela on utilise des méthodes de contrôle non destructif (CND) dites « classiques », sondant la structure au moyen d'ultrasons ou champs électromagnétiques ou, dans certains cas en la soumettant à une déformation élastique.

Un sujet de recherche actif depuis quelques années vise à intégrer des capteurs en des points clés de la structure afin d'automatiser la mesure pour pouvoir la répéter à intervalle régulier et généralement courts et/ou pour pouvoir accéder à des informations sur l'état de santé de certaines zones inaccessibles, sans démontage ni interruption du fonctionnement de la structure. On parle dans ce cas de « contrôle de santé intégré » (« SHM », ou « Structural Health Monitoring », c'est-à-dire « contrôle de santé structurelle », dans la littérature en langue anglaise).

Il a été proposé de réaliser un contrôle de santé intégré en utilisant des ondes ultrasonores guidées (OG) émises et détectées par des transducteurs piézoélectriques (PZT) intégrés dans la structure. Ces ondes guidées (dans le cas de structures de type plaque ou coque on parle d'« ondes de Lamb ») se propagent sur une grande distance - de quelques dizaines de centimètres à plusieurs centaines de mètres dans des géométries très favorables comme les pipelines - si bien qu'un nombre limité de transducteurs permet de contrôler une grande zone.

Les techniques de contrôle de santé intégré et de suivi du vieillissement basées sur des ondes guidées sont typiquement « actives », c'est-à-dire que les ondes ultrasonores sont émises par des transducteurs dédiés, et qu'on connait donc leurs caractéristiques (spectre, intensité, instant d'émission...). Voir par exemple :

- L. Ambrozinski, P. Packo, L. Pieczonka, T. Stepinski, T. Uhl, W. J. Staszewski « Identification of material properties - efficient modelling approach based on guided wave propagation and spatial multiple signal classification » Structural Control and Health Monitoring, 22(7):969-983, 2015.
- M. Calomfirescu. « Lamb Waves for Structural Health Monitoring in Viscoelastic Composite Materials ». thèse de doctorat, Université de Brème, 2008.
- Les documents US 2010/079258 A1, EP 2 728 348 A1 et WO 2015/119498 A1.

Dans le cadre du contrôle de santé intégré, cette approche présente l'inconvénient que l'émission des ondes nécessite d'injecter de l'énergie dans le milieu. Cela est coûteux et constitue généralement le paramètre dimensionnant, notamment en raison du fort impact sur la masse embarquée de la batterie alimentant le système de contrôle intégré.

Pour surmonter cette limitation des approches actives, il a été proposé d'avoir recours à des méthodes passives, exploitant le bruit ambiant naturellement présent dans la structure, induit par les sollicitations mécaniques extérieures (turbulences aérodynamiques, vibrations moteurs, ...). Le besoin en énergie du système est ainsi grandement réduit. Le système électronique est également simplifié car il ne nécessite plus de fonction d'émission, mais seulement une fonction de réception.

Par exemple, le document WO 2015/082292 décrit un procédé de tomographie par ultrasons exploitant le bruit diffus à l'intérieur d'une structure. L'inconvénient de cette approche est de nécessiter un nombre important de capteurs - ce qui augmente son coût - et un traitement complexe des données acquises.

L'article de Eric Larose, Philippe Roux, Michel Campillo « Reconstruction of Rayleigh-Lamb dispersion spectrum based on noise obtained from an air-jet forcing », J. Acoust. Soc. Am. 12 (6), décembre 2007, décrit un procédé de reconstruction d'une courbe de dispersion des ondes élastiques dans une structure de type plaque ou coque à partir du bruit ambiant. L'application au contrôle de santé intégré est simplement évoquée sans que des détails ne soient fournis. En outre, le procédé de reconstruction utilisé dans cet article nécessite l'acquisition d'un nombre élevé de mesures de bruit réalisant un maillage dense de la structure (cent acquisitions à autant de points de mesure espacés de 1 cm, obtenues en déplaçant 16 capteurs, pour une plaque carrée de 1 m de côté), ce qui rend la méthode peu pratique.

L'article de K. G. Sabra et al. « Using cross correlations of turbulent flow-induced ambient vibrations to estimate the structural impulse response. Application to structural health monitoring », J. Acoust. Soc. Am. 121 (4), avril 2007 décrit un procédé de contrôle de santé intégré comportant l'acquisition d'un bruit ambiant par deux capteurs non co-localisés, la détermination d'une réponse impulsionnelle de la structure par corrélation des signaux issus des deux capteurs et l'utilisation de cette réponse impulsionnelle pour réaliser une analyse modale de la structure. Si elle permet de détecter des défauts de structure, la méthode divulguée par cette publication ne permet pas d'accéder aux paramètres des matériaux, et donc de suivre les effets du vieillissement.

L'invention vise à surmonter les inconvénients précités de l'art antérieur. Plus particulièrement elle vise à procurer un procédé et un système de contrôle de santé intégré permettant de suivre le vieillissement d'une structure de manière fiable, simple et économique.

Un objet de l'invention permettant d'atteindre ce but est un procédé de contrôle de santé intégré d'une structure supportant des modes de propagation guidée d'ondes élastiques, comprenant les étapes suivantes :

> a) acquisition d'un bruit ambiant se propageant dans la structure au moyen d'au moins une paire de capteurs d'ondes élastiques non co-localisés ;
> b) estimation, à partir du bruit ambiant acquis lors de l'étape a), d'une fonction représentative d'une réponse impulsionnelle de la structure pour la propagation élastique entre les capteurs constituant ladite paire ;
> c) extraction d'au moins une courbe de dispersion de la propagation élastique dans la structure par analyse temps-fréquence de la fonction représentative d'une réponse impulsionnelle obtenue lors de l'étape b) ; et
> d) estimation d'au moins un paramètre indicatif d'une propriété mécanique d'un matériau constitutif de la structure à partir de la courbe de dispersion obtenue lors de l'étape c).

Selon des modes de réalisation particuliers d'un tel procédé :

- L'acquisition du bruit élastique peut être effectuée sur une durée au moins égale au temps de mélange de la structure.
- Ladite étape b) peut être mise en oeuvre par une méthode choisie parmi : un calcul de corrélation du bruit élastique acquis par les capteurs de la paire ; la méthode du filtre inverse passif ; et la corrélation des coda de corrélations.
- Ladite étape c) peut comprendre le calcul du temps de vol, entre les capteurs de la paire, d'une pluralité de paquets d'ondes élastiques présentant des fréquences centrales différentes.
- Ladite étape d) peut être mise en oeuvre par une méthode choisie parmi la régression par rapport à un modèle analytique de la courbe de dispersion et l'inversion d'un modèle numérique.
- L'étape d) peut comprendre l'estimation d'au moins un module d'élasticité d'un matériau constitutif de la structure, ou d'une fonction d'au moins un tel module.
- L'étape d) peut pêtre mise en oeuvre par une méthode itérative initialisée par une valeur dudit paramètre au début de la vie de la structure.
- Les étapes a) à d) peuvent être mises en oeuvre une pluralité de fois au cours d'une période d'utilisation de la structure, le procédé comprenant également les étapes suivantes :

> e) suivi de l'évolution temporelle du paramètre estimé lors de l'étape d) ; et
> f) déclanchement d'une alerte lorsque le suivi effectué lors de l'étape e) indique un vieillissement de la structure approchant d'un niveau critique.

- Les étapes a) à d) peuvent être mises en oeuvre une pluralité de fois en utilisant des paires respectives de capteurs non co-localisés, chaque paire de capteurs présentant une orientation différente.
- Le procédé peut comprendre également une mesure de la température de la structure et l'utilisation du résultat de cette mesure lors de la mise en oeuvre de l'étape d).
- Le bruit ambiant acquis lors de l'étape a) peut être enregistré et transféré à un dispositif de traitement de données éloigné de la structure, les étapes suivantes du procédé étant mises en oeuvre en temps différé par ledit dispositif de traitement de données.
- Ladite structure peut être de type poutre, tube, plaque ou coque.

Un autre objet de l'invention est un système de contrôle de santé intégré d'une structure de type plaque ou coque, comprenant:

- au moins une paire de capteurs d'ondes élastiques non co-localisés permettant l'acquisition d'un bruit ambiant se propageant dans la structure ; et
- un dispositif de traitement de données configuré pour :
- recevoir desdits capteurs un signal représentatif du bruit ambiant acquis ;
- estimer, à partir du bruit ambiant acquis lors de l'étape a), une fonction représentative d'une réponse impulsionnelle de la structure pour la propagation élastique entre les capteurs constituant ladite paire ;
- extraire au moins une courbe de dispersion de la propagation élastique dans la structure par analyse temps-fréquence de ladite fonction représentative d'une réponse impulsionnelle ; et
- estimer au moins un paramètre indicatif d'une propriété mécanique d'un matériau constitutif de la structure à partir de ladite courbe de dispersion.

Selon des modes de réalisation particuliers d'un tel système :

- Lesdits capteurs d'ondes élastiques peuvent être choisis parmi des capteurs à réseau de Bragg sur fibre optique, des accéléromètres micro-électro-mécaniques et des capteurs piézoélectriques.
- Le système peut comprendre également un capteur de température, et ledit dispositif de traitement de données peut être également configuré pour utiliser une mesure de température de la structure acquise par ledit capteur pour estimer ledit paramètre indicatif d'une propriété mécanique d'un matériau constitutif de la structure.

D'autres caractéristiques, détails et avantages de l'invention ressortiront à la lecture de la description faite en référence aux dessins annexés donnés à titre d'exemple et qui représentent, respectivement :

- La figure 1, un organigramme d'un procédé selon un mode de réalisation de l'invention ;
- La figure 2, un appareil selon un mode de réalisation de l'invention ;
- La figure 3, une trace d'acquisition du bruit ambiant sur 0,1 seconde ;
- La figure 4, la corrélation croisée du bruit ambiant acquis par deux capteurs, sur 10 secondes ;
- Les figures 5a et 5b, une analyse temps-fréquence d'une fonction représentative de la réponse impulsionnelle de la structure obtenue par corrélation croisée et par application de la méthode du filtre inverse passif, respectivement ;
- Les figures 6a et 6b, une autre analyse temps-fréquence d'une fonction représentative de la réponse impulsionnelle de la structure obtenue par corrélation croisée et par application de la méthode du filtre inverse passif, respectivement ;
- Les figures 7a et 7b, des courbes de dispersion obtenues par corrélation croisée et par application de la méthode du filtre inverse passif, respectivement ;
- La figure 8, une comparaison entre des courbes de dispersion obtenues par des procédés selon différents modes de réalisation de l'invention et des courbes théoriques ; et
- la figure 9, un agencement de plusieurs capteurs selon un mode de réalisation de l'invention.

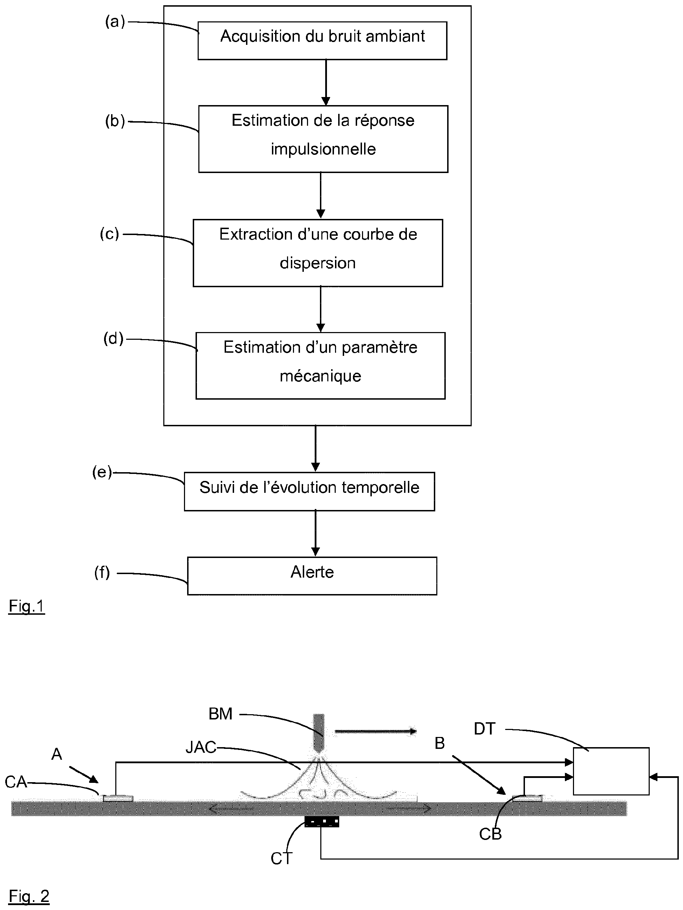

Comme illustré sur la figure 1, un procédé selon un mode de réalisation de l'invention comprend :

- Une première étape (a) d'acquisition du bruit ambiant se propageant dans la structure sous contrôle au moyen d'au moins deux capteurs situés à des endroits différents.
- Une deuxième étape (b) d'estimation de la réponse impulsionnelle (fonction de Green) - ou plus généralement d'une fonction représentative de cette réponse impulsionnelle mais pas nécessairement identique à elle - à partir des acquisitions réalisées dans la première étape.
- Une troisième étape (c) d'extraction d'une courbe de dispersion par analyse temps-fréquence de la réponse impulsionnelle estimée dans la deuxième étape.
- Une quatrième étape (d) d'estimation d'un paramètre mécanique caractérisant le matériau constituant la structure à partir de cette courbe de dispersion. Il peut s'agir par exemple du module d'Young, plus généralement d'un module du tenseur des constantes élastiques (module d'élasticité), ou d'une fonction d'un ou plusieurs de ces modules.

Les étapes (a) à (d) sont répétées plusieurs fois, de préférence à intervalles réguliers, au cours de la durée de vie de la structure, ce qui permet d'effectuer un suivi de l'évolution temporelle du paramètre mécanique estimé lors de l'étape (d), et donc du vieillissement du matériau considéré (étape (e)). Lorsque ce vieillissement approche d'un niveau critique, une alerte peut être déclenchée (étape (f)). Par exemple, l'événement déclencheur de l'alerte peut être la diminution du module d'Young au-dessous d'un certain niveau.

Dans la suite, différents modes de réalisation des étapes (a) à (d) seront décrits en détail.

Première étape : acquisition du bruit ambiant

Par bruit ambiant on entend champ d'ondes élastiques dans la structure provenant d'une multitude de sources, potentiellement de très faibles intensités, à des positions et des temps aléatoires ou de sources en nombre plus limité mais plus intenses générant des ondes multi-diffusées dans des cavités réverbérantes ou des milieux diffusants.

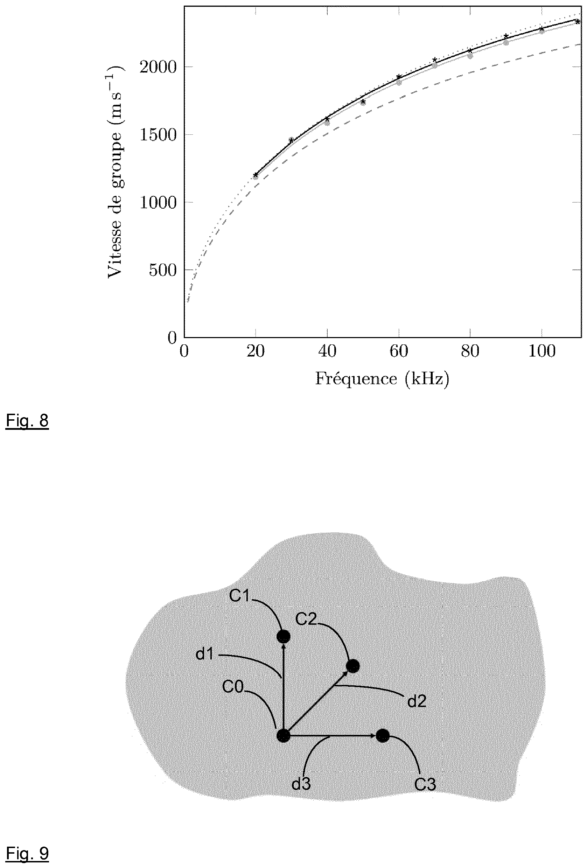

Ce bruit ambiant peut être acquis au moyen de différentes sortes de capteurs connus de l'art antérieur : des transducteurs piézoélectriques (PZT), des accéléromètres microélectromécaniques (MEMS), des réseaux de Bragg sur fibre optique (FBG), etc. La mise en oeuvre de l'invention nécessite au moins deux tels capteurs, intégrés à la structure à deux endroits différents. Dans un souci de simplicité, on cherchera à minimiser le nombre de capteurs, donc à en utiliser seulement une paire à chaque fois que cela est possible. Dans certains cas, cependant, il sera nécessaire d'utiliser plusieurs capteurs, en particulier si l'on veut suivre le vieillissement au niveau de plusieurs zones de la structure ou si l'on travaille sur un composite anisotrope que l'on veut caractériser suivant plusieurs directions. Cette dernière situation est illustré sur la figure 9, où quatre capteurs C0, C1, C2, C3 forment trois paires (C0, C1), (C0, C2), (C0, C3) qui permettent de caractériser la structure suivant trois directions d1, d2, d3. Bien entendu, il est possible d'utiliser encore plus de capteurs pour caractériser la structure suivant un plus grand nombre de directions. Il est également possible d'utiliser les quatre capteurs pour caractériser la structure suivant trois directions additionnelles, en considérant les paires (C1, C2), (C1, C3) et/ou (C2, C3).

L'acquisition est totalement passive, elle nécessite peu d'énergie, donc un système selon l'invention peut être facilement embarqué sur un avion, un bateau ou au fond de la mer. Cette mesure passive est compatible avec l'emploi de transducteurs fonctionnant en mode de réception uniquement, tels que les FBG précités. Cette option des FBG est particulièrement intéressante lorsqu'on souhaite équiper la structure d'un nombre de points de mesure supérieur à deux, par exemple pour suivre le vieillissement de plusieurs zones de la structure. En effet, alors que l'utilisation des PZT requiert deux fils électriques par capteur, une seule fibre optique - par exemple intégrée entre les plis d'un matériau composite - peut comporter des dizaines de points de mesure. Le nombre de points d'entrée dans la structure est donc très limité ce qui limite d'autant plus les points de fragilisation potentiels.

La méthode est d'autant plus efficace que le champ élastique est diffus. Des éléments géométriques diffractant de multiples fois les ondes élastiques ne sont donc pas gênants, au contraire, ils améliorent la pertinence de la méthode. Ceci est particulièrement vrai dans les structures industrielles qui ne sont jamais de simples plaques mais comportent des raidisseurs, des rivets, des surépaisseurs locales... La convergence de la méthode est facilitée lorsque la condition d'équi-répartition de l'énergie est satisfaite, c'est-à-dire lorsque la répartition en phase et en amplitude des ondes est aléatoire, et que par conséquent ces dernières se propagent de manière homogène dans tous les sens. Cette condition est notamment satisfaite (condition suffisante mais non nécessaire) lorsque l'acquisition des signaux est effectuée sur une durée au moins égale au temps de mélange de la structure. Le temps de mélange est défini comme le temps nécessaire pour qu'une onde élastique donne naissance à un champ diffus, sans direction de propagation privilégiée.

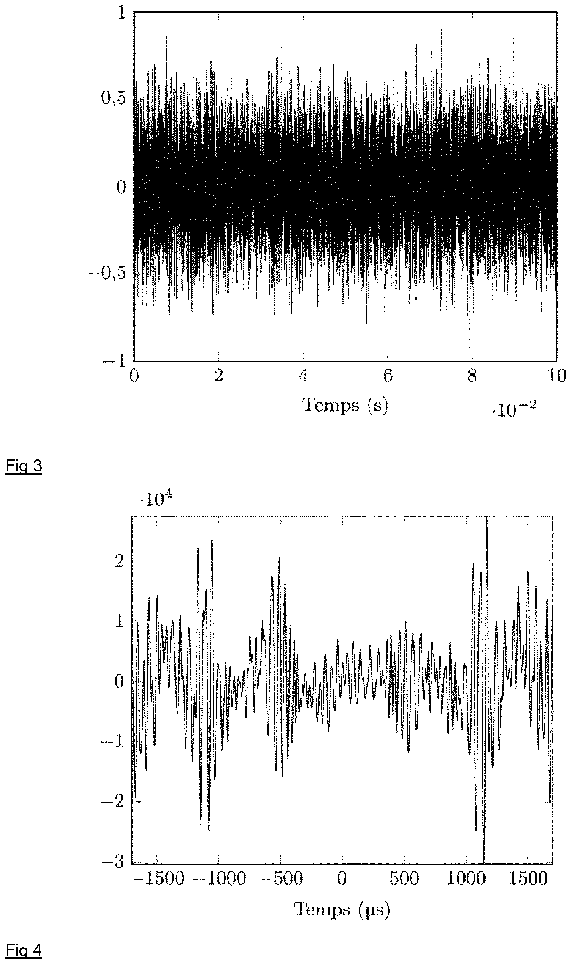

La figure 2 illustre un système de contrôle de santé intégré selon un mode de réalisation de l'invention, qui a été utilisé à des fins de démonstrations. La structure S est constituée d'une plaque d'aluminium de 2 mm d'épaisseur, à laquelle ont été fixés deux transducteurs piézoélectriques CA, CB utilisés comme capteurs, situés à des points A et B agencés sur la surface de la structure et espacés de 600 mm. Le bruit ambiant a été crée en utilisant une buse mobile BM, déplacée de manière pseudo-aléatoire, pour diriger un jet d'air comprimé JAC sur la plaque. Il a été acquis par les transducteurs pendant un temps de 10 secondes ; la figure 3 montre le signal acquis par le transducteur CA pendant 0,1 seconde.

Les sources de bruit naturelles dans les structures industrielles peuvent être, par exemple, la couche limite turbulente en aéronautique, l'impact des vagues, les vibrations induites par les moteurs ou un écoulement turbulent dans un tube (conduites forcées).

Le champ ultrasonore capté par les transducteurs est transmis à un dispositif de traitement des données DTD. Ce dernier comprend en général une électronique de conditionnement (amplification, filtrage) et de conversion au format numérique des signaux issus des capteurs, ainsi qu'un processeur numérique qui met en oeuvre les étapes suivantes - (b) à (d), ou (b) à (f), du procédé. Le processeur numérique peut être un ordinateur ou une carte à microprocesseur équipé d'une mémoire stockant un programme approprié, ou bien un circuit numérique dédié, réalisé à partir d'un dispositif programmable tel un FPGA. Le dispositif de traitement des données peut se composer de deux parties distinctes, une associée à la structure et l'autre éloignée. Dans le cas, par exemple, où la structure à surveiller est un élément d'un avion, la partie embarquée peut stocker les signaux, le traitement étant effectué par un ordinateur au sol après l'atterrissage. Ou alors la partie embarquée peut transmettre les signaux au sol via une liaison radio, ce qui permet un traitement en temps réel si nécessaire. Encore une autre option consiste à effectuer le traitement dans la partie embarquée du système et de ne transmettre (ou stocker en local) que les résultats, c'est-à-dire les paramètres matériaux identifiés.

Un capteur de température (référence CT sur la figure 2) peut être optionnellement prévu pour calibrer de façon précise la distance entre les capteurs, si elle n'est pas bien connue, ou bien pour compenser les effets de la température sur la propagation des ondes.

En effet, un procédé selon l'invention nécessite de connaître avec une grande précision la position des capteurs. Une alternative à la mesure des positions individuelles de ces capteurs est un étalonnage effectué juste après leur pose, à une température contrôlée, afin de mesurer les temps de vols entre les capteurs. En connaissant la vitesse de l'état initial à $t_0$ on peut en déduire la position des capteurs avec une très bonne précision. Si la vitesse de l'état initial n'est pas connue de façon précise, on peut stocker le temps de vol pour chaque paire de capteurs et travailler sur une variation de temps de vol.

Connaissant la température au moment de l'étalonnage, si on connait la température de la structure à l'aide d'un thermocouple intégré à l'instant t on peut, en outre, compenser la variation de temps de vol induite par la température (on peut penser aux grandes variations de températures lors du vol d'un avion).

Deuxième étape : estimation de la réponse impulsionnelle (fonction de Green)

Plusieurs méthodes connues de l'art antérieur permettent de déterminer la fonction de Green de la structure - définissant sa réponse impulsionnelle - à partir de mesures du bruit ambiant. Un mode de réalisation préféré de l'invention utilise la corrélation de champs élastiques diffus, décrite dans l'article de R.L. Weaver et O.I. Lobkis « Ultrasonics without a source: Thermal fluctuation correlations at MHz frequencies » Physical Review Letters, 87:134301, 2001.

Cette méthode prévoit de calculer une corrélation croisée des champs élastiques $u_A$ et $u_B$ (champs de déplacements) acquis simultanément par les capteurs CA et CB :

$$\Gamma_{AB}(t) = \int u_A(t+\tau).u_B(\tau)d\tau.$$

La figure 3 est une portion d'une trace d'un bruit acquis dans le système de la figure 2, et la figure 4 est un graphique d'une corrélation croisée obtenue à partir d'un tel bruit, mesuré à deux endroits différents.

Lorsque la répartition en phase et en amplitude des ondes élastiques est aléatoire (condition d'équi-répartition de l'énergie), ce qui est généralement vérifié si la structure est diffusante et si l'on acquiert le bruit sur une durée suffisante (supérieure ou égale temps de mélange), il existe un lien entre cette corrélation croisée et les fonctions de Green causale ($G_{AB}(t)$) et anti-causale ($G_{BA}(-t)$) entre les points A et B:

$$\frac{\partial \Gamma_{AB}(t)}{\partial t} \approx F(t) \otimes [G_{AB}(t) - G_{BA}(-t)]$$

où F est un filtre qui prend en compte la bande passante des capteurs et le spectre du bruit ambiant présent dans la structure.

Pour mémoire, la fonction de Green entre A et B est l'enregistrement que l'on obtiendrait en B si une source émettait un signal impulsif en A (on parle donc de réponse impulsionnelle du milieu).

Il est également possible de ne pas calculer la dérivée, et par exemple d'utiliser directement la corrélation croisée comme fonction représentative de la réponse impulsionnelle. En effet, le but de cette étape n'est pas de déterminer la fonction de Green en tant que telle, mais de caractériser la réponse impulsionnelle pour pouvoir ensuite (étape (b)) en extraire des courbes de dispersion.

Pour retrouver de façon exacte les fonctions de Green causale et anti-causale entre A et B il faudrait que les transducteurs aient une réponse constante en fréquence et que le bruit ambiant soit un bruit blanc. En pratique ces conditions ne seront jamais vérifiées de manière exacte, mais pourront l'être de manière approchée et suffisante pour atteindre les buts de l'invention. L'expérience montre que des résultats satisfaisants peuvent être obtenus pour des transducteurs présentant une bande passante comprise entre 1 kHz (ou quelques kHz) et quelques MHz, par exemple 10 MHz.

D'autres méthodes peuvent être utilisées si la condition d'équi-répartition de l'énergie n'est pas satisfaite. On mentionnera en particulier deux d'entre elles :

- le filtre inverse passif, décrit dans l'article de T. Gallot et al. « A passive inverse filter for Green's function retrieval », J. Acoust. Soc. Am. 131 (1), janvier 2012 ;
- la corrélation des coda de corrélation, décrite dans l'article de L. Sthely at al. « Reconstructing Green's function by corrélation of the coda of the corrélation (C3) of ambient seismic noise », Journal Of Geophysical Research, Vol. 113, B11306, (2008). Cette dernière technique nécessite au moins trois capteurs.

Troisième étape : extraction d'une courbe de dispersion

Les ondes élastiques guidées qui peuvent se propager dans des structures mécaniques guidantes (poutres ; plaques ou coques, supportant des modes dits de Lamb ; objets massifs dont les surfaces supportent des ondes de Rayleigh) sont en général dispersives : la vitesse de propagation dépend de la fréquence. Chaque mode de propagation guidée peut être caractérisé par des courbes - dites courbes de dispersion - représentants différentes caractéristiques du mode (nombre d'onde, vitesse de phase, vitesse de groupe, longueur d'onde, voire atténuation) en fonction de la fréquence. Dans la suite on considérera essentiellement la vitesse de groupe, mais cela ne doit pas être considéré limitatif. Ces courbes de dispersion peuvent être estimées à partir d'une connaissance de la réponse impulsionnelle, obtenue lors de l'étape précédente, grâce à des techniques d'analyse temps-fréquence.

Les techniques d'analyse temps-fréquence requièrent avantageusement un nombre limité de capteurs, contrairement aux techniques utilisant la transformée de Fourier spatio-temporelle. Dans l'article de Eric Larose, Philippe Roux, Michel Campillo « Reconstruction of Rayleigh-Lamb dispersion spectrum based on noise obtained from an airjet forcing », J. Acoust. Soc. Am. 12 (6), décembre 2007, une transformée de Fourier spatio-temporelle est appliquée, ce qui nécessite d'utiliser seize capteurs devant être déplacés pour obtenir au final une centaine d'enregistrements. L'utilisation de la transformée de Fourier spatio-temporelle avec un nombre limité de capteurs dégraderait fortement la mesure.

L'intérêt des courbes de dispersion pour le contrôle de santé intégré est qu'elles dépendent directement des paramètres du matériau de la plaque. Dans le cas d'un matériau homogène isotrope, ces paramètres peuvent être exprimés par le module d'Young et/ou le coefficient de Poisson, qui sont classiquement utilisés en mécanique pour étudier le comportement du matériau. Plus généralement, il peut s'agir d'un ou plusieurs modules du tenseur des constantes élastiques du matériau, ou de fonctions de ces modules.

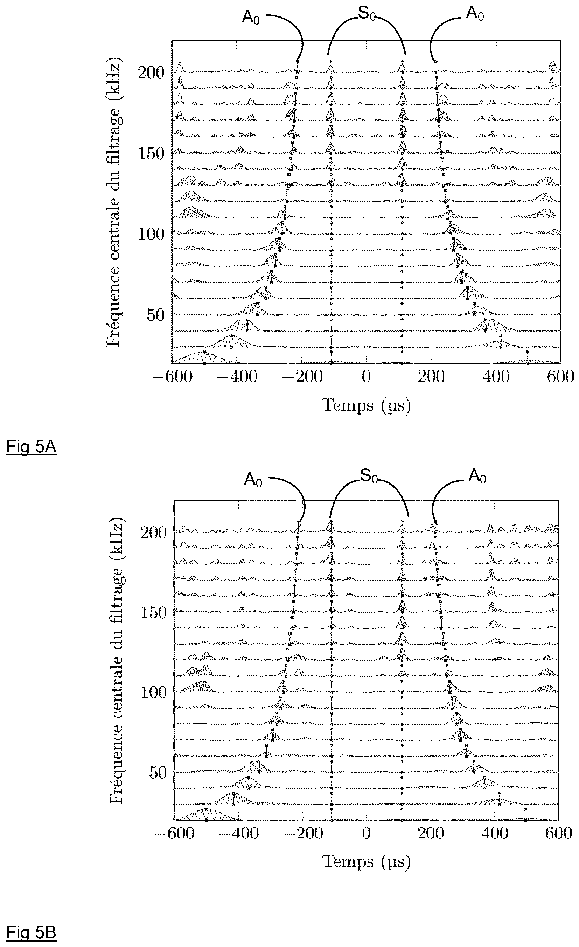

La technique la plus simple pour obtenir une courbe de dispersion consiste à filtrer la réponse impulsionnelle de la structure par des filtres passe-bande présentant différentes fréquences centrales. On obtient de cette façon plusieurs paquets d'ondes à des temps différents, liés à leurs vitesses de groupe. Cela est illustré sur les figures 5A et 5B ; la figure 5A a été obtenue en calculant la corrélation croisée du bruit, la figure 5B par la technique du filtre inverse ; le bruit acquis est le même dans les deux cas et a été obtenu par le système de la figure 2).

Ces figures montrent la présence de deux modes, un mode $S_0$, peu dispersif, à haute fréquence, et un mode $A_0$, plus dispersif, à basse fréquence. Des marqueurs, en forme de carré pour le mode $A_0$ et de cercle pour le mode $S_0$, identifient les temps de vol théoriques des paquets d'onde ; on peut vérifier qu'ils coïncident, avec une très bonne approximation, avec les pics des paquets d'ondes calculés conformément à l'invention. Dans la suite on ne considère que le mode $A_0$.

En identifiant le temps correspondant au maximum de chaque paquet d'onde on détermine le temps de vol du paquet sur la distance A - B et donc, la distance étant supposée connue, la vitesse de groupe à la fréquence centrale du paquet.

L'apparition du mode $S_0$ vers 120 kHz crée un rebond au bord de la plaque de ce mode qui vient interférer avec $A_0$ ($S_0$ se propage environ deux fois plus vite qu'$A_0$ pour ces fréquences-là). On ne peut donc pas profiter des temps de vol au-dessus de 120kHz dans cette configuration-là. En pratique, cette problématique peut être évitée en plaçant les capteurs loin des bords réfléchissants.

D'autres technique d'analyse temps-fréquence peuvent être utilisées, par exemple les spectrogrammes réalloués, les scalogrammes réalloués, la « Hilbert-Huang Transform », la « SyncroSqueezing Transform », etc...

Par exemple, la « SyncroSqueezing Transform » et la méthode des spectrogrammes réalloués sont décrites dans l'article de F. Auger, P. Flandrin, Y.-T. Lin, S. Mclaughlin, S. Meignen, T. Oberlin, H.-T. Wu, « Time-Frequency Reassignment and Synchrosqueezing: An overview », IEEE Signal Processing Magazine, vol. 30, no. 6, pp. 32-41, novembre 2013.

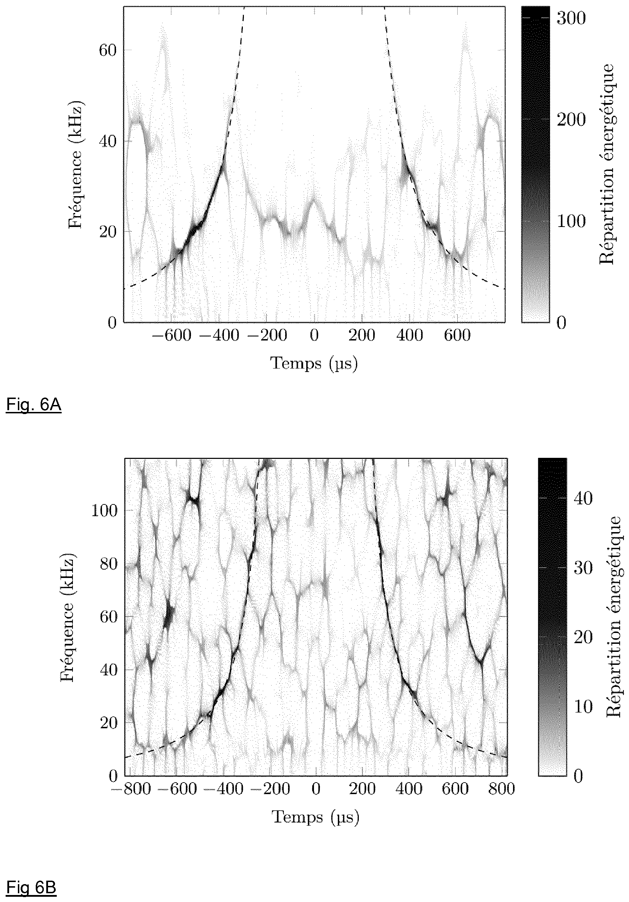

Les figures 6A et 6B illustrent des spectrogrammes réalloués, contenant la même information que les graphiques de figures 5A et 5B.

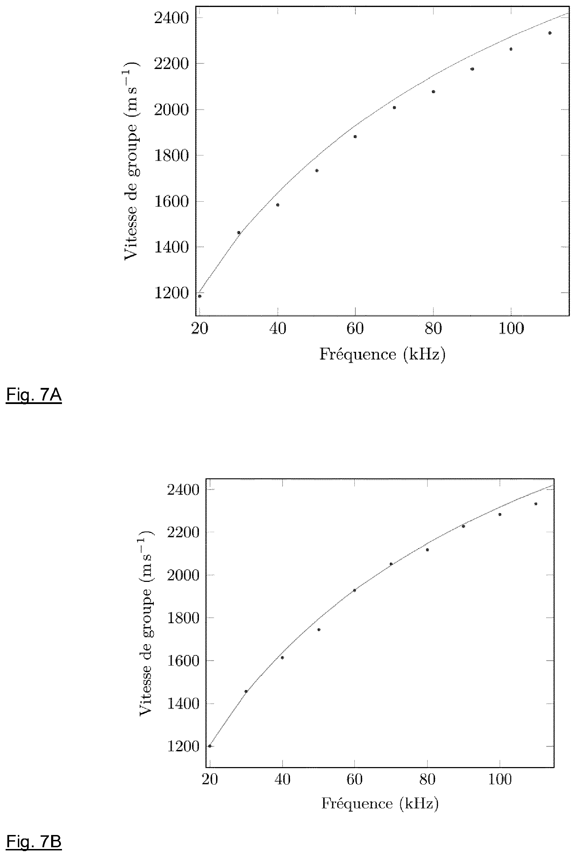

Les figures 7A et 7B montrent l'évolution des vitesses de groupe par identification des temps de vol sur les signaux passifs acquis par le système de la figure 2 pour le cas de la dérivée de la corrélation de champs élastiques diffus (7A) et pour celui du filtre inverse passif (7B). Sur ces figures, les points représentent les valeurs calculées et les lignes les courbes de dispersion théoriques. On peut voir que les résultats expérimentaux sont en bon accord avec la théorie, ce qui prouve la faisabilité de l'identification des caractéristiques mécaniques par méthodes passive.

Quatrième étape : estimation d'un paramètre mécanique caractérisant le matériau constituant la structure

Cette quatrième étape peut être mise en oeuvre en minimisant l'écart entre les courbes de dispersion reconstruites expérimentalement et celles obtenues par un modèle théorique, analytique ou numérique. Cette minimisation permet d'accéder aux propriétés du matériau de la structure. On procède donc soit par minimisation par rapport à une équation analytique, lorsqu'elle est connue, soit par inversion d'un modèle numérique du calcul des indicateurs.

Lorsqu'on cherche à suivre le vieillissement d'un matériau, on a connaissance de ses propriétés mécaniques à un instant $t_0$ pris comme étant le début de sa vie. Cette connaissance permet d'initialiser la méthode de minimisation, mise en oeuvre de manière itérative. Cette initialisation sera forcément très proche du résultat, évitant tout risque de convergence vers un minimum local. Au cours de la durée de vie du matériau, le paramètre estimé évoluera en fonction du vieillissement du matériau.

A titre d'exemple on considère des données expérimentales sur la bande [20 ; 110] kHz acquises sur une plaque d'aluminium de 2 mm d'épaisseur (cf. fig. 2). La courbe en trait pointillé sur la figure 8 montre la courbe de dispersion de la vitesse de groupe théorique du mode $A_0$, pour une structure en début de vie ; la courbe en tirets a été obtenue en diminuant de 25% le module de Young du matériau, de manière à simuler les effets d'un vieillissement. Ces courbes ont étés calculées à l'aide d'une méthode semi-analytique d'éléments finis (« SAFE ») décrite dans l'article de I. Bartoli et al. « Modeling wave propagation in damped waveguides of arbitrary crosssection », Journal of Sound and Vibration 295, pp. 685-707 (2006).

Toujours sur la figure 8, les points gris correspondent aux valeurs de la vitesse de groupe calculées, à partir des données expérimentales, par corrélation croisées ; les étoiles noires, aux valeurs calculées par la méthode du filtre inverse passif. Les lignes continues grise et noire, respectivement, sont les courbes calculées par régression en utilisant la théorie de Mindlin-Reissner. Cette théorie fournit une expression analytique de la vitesse de groupe en fonction de deux paramètres : la vitesse de plaque $V_P$ et la vitesse de cisaillement modifiée par la théorie de Mindlin $V_T'$. La vitesse de plaque $V_P$ est la vitesse de groupe du mode $S_0$ à la fréquence nulle, et est donnée par $$V_P = 2V_T\sqrt{1 - \frac{V_T^2}{V_L^2}}$$ , où $V_L$ est la vitesse de phase des ondes longitudinales et $V_T$ celle des ondes transversales, ou de cisaillement. Les valeurs de ces paramètres sont choisies de manière à minimiser l'écart quadratique moyen avec les valeurs de vitesse de groupe obtenues à partir des résultats expérimentaux (points gris et étoiles noires).

Une fois que les valeurs $V_P$ et $V'_T$ ont été déterminées, on peut calculer le module d'Young E et le coefficient de poisson v en utilisant les relations suivantes :

$$E = \frac{12\rho\frac{V_T'^2}{\pi^2}\left[\frac{3}{1 - \frac{\pi^2 V_P^2}{48V_T'^2}} - 4\right]}{\frac{1}{1 - \frac{\pi^2 V_P^2}{48V_T'^2}} - 1}$$

$$v = \frac{\frac{1}{1 - \frac{\pi^2 V_P^2}{48V_T'^2}} - 2}{2\left[\frac{1}{1 - \frac{\pi^2 V_P^2}{48V_T'^2}} - 1\right]}$$

Le tableau 1 montre les valeurs théoriques de $V_p$, $V'_T$, E et v, et celles déterminées par la méthode de la dérivée de la corrélation et du filtre inverse passif. Les pourcentages d'erreurs par rapport aux valeurs théoriques (plaque d'aluminium 2024 d'épaisseur 2 mm) sont tout à fait acceptables.

Tableau 1

|  | Théorie (m/s) | Corrélation (m/s) | Filtre inverse passif (m/s) |
|---|---|---|---|
| Vitesse de plaque | 5461 | 5286 (3.2% d'erreur) | 5470 (0.2% d'erreur) |

(suite)

|  | Théorie (m/s) | Corrélation (m/s) | Filtre inverse passif (m/s) |
|---|---|---|---|
| Vitesse de cisaillement (Mindlin) | 2848 | 2816 (1.1 % d'erreur) | 2812 (1.3% d'erreur) |
| Module d'Young (GPa) | 71,3 | 68,2 (4,3% d'erreur) | 70.5 (3,2% d'erreur) |
| Coefficient de poisson | 0,34 | 0,31 (8.8% d'erreur) | 0,36 (5.9% d'erreur) |

Le tableau 2 montre l'effet d'un vieillissement qui correspond à une diminution du module d'Young de 25%, ce qui est classiquement utilisé dans la littérature. On passe donc d'un état sain où E = 71.3 GPa à un état endommagé où E = 53.5 GPa. Le système est donc suffisamment sensible pour détecter de telles variations et donc anticiper le vieillissement du matériau avant qu'il ne soit critique.

Tableau 2

|  | 100% module d'Young | 75% module d'Young |
|---|---|---|
| Vitesse de plaque | 5461 | 4733 (13.3% de variation) |
| Vitesse de cisaillement (Mindlin) | 2848 | 2466 (13.4% de variation) |

Cette étape peut utiliser des techniques d'identification de paramètres différentes d'une simple régression, par exemple des réseaux de neurones artificiels. Voir par exemple E. Pabisek et Z. Waszczyszyn, « Identification of thin elastic isotropic plate parameters applying Guided Wave Measurement and Artificial Neural Networks » Mechanical Systems and Signal Processing, 2015

La technique décrite jusqu'ici tire parti des sources naturelles de bruit présentes dans la structure. Rien n'empêche, dans certains cas, de rajouter des sources de bruit actives, par exemple des PZT placés dans la structure, afin de pouvoir faire des mesures même en l'absence de bruit (par exemple, dans un avion si les sources naturelles sont les turbulences en vol, on peut aussi utiliser les sources actives pour pouvoir faire une mesure au sol, lorsqu'il n'y a plus de bruit dans la structure). Ces sources n'ont pas besoin d'être synchronisés avec les récepteurs ce qui simplifie le montage électronique par rapport aux méthodes actives.

**Revendications**

**1.** Procédé de contrôle de santé intégré d'une structure (S) supportant des modes de propagation guidée d'ondes élastiques, mis en oeuvre de manière passive, comprenant les étapes suivantes :

a) acquisition d'un bruit ambiant se propageant dans la structure au moyen d'au moins une paire de capteurs d'ondes élastiques (CA, CB) non co-localisés ;
b) estimation, à partir du bruit ambiant acquis lors de l'étape a), d'une fonction représentative d'une réponse impulsionnelle de la structure pour la propagation élastique entre les capteurs constituant ladite paire ; **caractérisé en ce qu'**il comprend en outre les étapes suivantes :

c) extraction d'au moins une courbe de dispersion de la propagation élastique dans la structure par analyse temps-fréquence de la fonction représentative d'une réponse impulsionnelle obtenue lors de l'étape b) ; et
d) estimation d'au moins un paramètre indicatif d'une propriété mécanique d'un matériau constitutif de la structure à partir de la courbe de dispersion obtenue lors de l'étape c).

**2.** Procédé selon la revendication 1 dans lequel l'acquisition du bruit élastique est effectuée sur une durée au moins égale au temps de mélange de la structure.

**3.** Procédé selon l'une des revendications précédentes dans lequel ladite étape b) est mise en oeuvre par une méthode choisie parmi :

- un calcul de corrélation du bruit élastique acquis par les capteurs de la paire ;
- la méthode du filtre inverse passif ; et
- la corrélation des coda de corrélations.

**4.** Procédé selon l'une des revendications précédentes dans lequel ladite étape c) comprend le calcul du temps de vol, entre les capteurs de la paire, d'une pluralité de paquets d'ondes élastiques présentant des fréquences centrales différentes.

**5.** Procédé selon l'une des revendications précédentes dans lequel ladite étape d) est mise en oeuvre par une méthode choisie parmi la régression par rapport à un modèle analytique de la courbe de dispersion et l'inversion d'un modèle numérique.

**6.** Procédé selon l'une des revendications précédentes dans lequel l'étape d) comprend l'estimation d'au moins un module d'élasticité d'un matériau constitutif de la structure, ou d'une fonction d'au moins un tel module.

**7.** Procédé selon l'une des revendications précédentes dans lequel l'étape d) est mise en oeuvre par une méthode itérative initialisée par une valeur dudit paramètre au début de la vie de la structure.

**8.** Procédé selon l'une des revendications précédentes dans lequel les étapes a) à d) sont mises en oeuvre une pluralité de fois au cours d'une période d'utilisation de la structure, le procédé comprenant également les étapes suivantes :

e) suivi de l'évolution temporelle du paramètre estimé lors de l'étape d) ; et
f) déclanchement d'une alerte lorsque le suivi effectué lors de l'étape e) indique un vieillissement de la structure approchant d'un niveau critique.

**9.** Procédé selon l'une des revendications précédentes dans lequel les étapes a) à d) sont mises en oeuvre une pluralité de fois en utilisant des paires respectives de capteurs non co-localisés (C0,C1 ; C0,C2 ; C0,C3), chaque paire de capteurs présentant une orientation différente (d1, d2, d3).

**10.** Procédé selon l'une des revendications précédentes comprenant également une mesure de la température de la structure et l'utilisation du résultat de cette mesure lors de la mise en oeuvre de l'étape d).

**11.** Procédé selon l'une des revendications précédentes dans lequel le bruit ambiant acquis lors de l'étape a) est enregistré et transféré à un dispositif de traitement de données éloigné de la structure, les étapes suivantes du procédé étant mises en oeuvre en temps différé par ledit dispositif de traitement de données.

**12.** Procédé selon l'une des revendications précédentes dans lequel ladite structure est de type poutre, tube, plaque ou coque.

**13.** Système de contrôle de santé intégré d'une structure (S) de type plaque ou coque, comprenant:

- au moins une paire de capteurs d'ondes élastiques (CA, CB) non co-localisés permettant l'acquisition passive d'un bruit ambiant se propageant dans la structure ; et
- un dispositif de traitement de données (DTD) configuré pour :
- recevoir desdits capteurs un signal représentatif du bruit ambiant acquis ;
- estimer, à partir du bruit ambiant acquis par lesdits capteurs, une fonction représentative d'une réponse impulsionnelle de la structure pour la propagation élastique entre les capteurs constituant ladite paire ;
**caractérisé en ce qu'**il est en outre configuré pour :

- extraire au moins une courbe de dispersion de la propagation élastique dans la structure par analyse temps-fréquence de ladite fonction représentative d'une réponse impulsionnelle ; et
- estimer au moins un paramètre indicatif d'une propriété mécanique d'un matériau constitutif de la structure à partir de ladite courbe de dispersion.

**14.** Système selon la revendication 13 dans lequel lesdits capteurs d'ondes élastiques sont choisis parmi des capteurs à réseau de Bragg sur fibre optique, des accéléromètres micro-électro-mécaniques et des capteurs piézoélectriques.

**15.** Système selon l'une des revendications 13 ou 14 comprenant également un capteur de température (CT) et dans lequel ledit dispositif de traitement de données est également configuré pour utiliser une mesure de température de la structure acquise par ledit capteur pour estimer ledit paramètre indicatif d'une propriété mécanique d'un matériau constitutif de la structure.

EP 3 555 585 B1

**Patentansprüche**

1. Verfahren zum Überwachen des Strukturzustands einer Struktur (S), die geführte Ausbreitungsmodi elastischer Wellen unterstützt, passiv umgesetzt, das die folgenden Schritte umfasst:

   a) Erfassen eines sich in der Struktur ausbreitenden Umgebungsgeräuschs mittels mindestens eines Paares von nicht kolokalisierten Sensoren für elastische Wellen (CA, CB);
   b) Schätzen, auf der Basis des in Schritt a) erfassten Umgebungsgeräuschs, einer Funktion, die für eine Impulsantwort der Struktur für die elastische Ausbreitung zwischen den das Paar bildenden Sensoren repräsentativ ist;
   **dadurch gekennzeichnet, dass** es ferner die folgenden Schritte umfasst:

   c) Extrahieren von mindestens einer Dispersionskurve der elastischen Ausbreitung in der Struktur durch Zeit-Frequenz-Analyse der in Schritt b) erhaltenen für eine Impulsantwort repräsentativen Funktion; und
   d) Schätzen mindestens eines Parameters, der eine mechanische Eigenschaft eines die Struktur bildenden Materials anzeigt, auf der Basis der in Schritt c) erhaltenen Dispersionskurve.

2. Verfahren nach Anspruch 1, wobei die Erfassung des elastischen Geräuschs über einen Zeitraum erfolgt, der mindestens gleich der Mischzeit der Struktur ist.

3. Verfahren nach einem der vorhergehenden Ansprüche, wobei Schritt b) durch eine Methode umgesetzt wird, die ausgewählt wird aus:

   - einer Korrelationsberechnung des von den Sensoren des Paares erfassten elastischen Geräuschs;
   - der Methode des passiven inversen Filters; und
   - der Korrelation der Korrelationscodas.

4. Verfahren nach einem der vorhergehenden Ansprüche, wobei Schritt c) die Berechnung der Laufzeit einer Vielzahl von elastischen Wellenpaketen mit unterschiedlichen Mittenfrequenzen zwischen den Sensoren des Paares umfasst.

5. Verfahren nach einem der vorhergehenden Ansprüche, wobei Schritt d) durch eine Methode umgesetzt wird, die aus der Regression in Bezug auf ein analytisches Modell der Dispersionskurve und der Inversion eines numerischen Modells ausgewählt ist.

6. Verfahren nach einem der vorhergehenden Ansprüche, wobei Schritt d) die Schätzung mindestens eines Elastizitätsmoduls eines die Struktur bildenden Materials oder einer Funktion mindestens eines solchen Moduls umfasst.

7. Verfahren nach einem der vorhergehenden Ansprüche, wobei Schritt d) durch eine iterative Methode umgesetzt wird, die durch einen Wert des Parameters zu Beginn der Lebensdauer der Struktur initialisiert wird.

8. Verfahren nach einem der vorhergehenden Ansprüche, wobei die Schritte a) bis d) während einer Verwendungsperiode der Struktur eine Vielzahl von Malen umgesetzt werden, wobei das Verfahren auch die folgenden Schritte umfasst:

   e) Verfolgen der zeitlichen Entwicklung des in Schritt d) geschätzten Parameters; und
   f) Auslösen eines Alarms, wenn die in Schritt e) durchgeführte Verfolgung anzeigt, dass sich die Alterung der Struktur einem kritischen Niveau nähert.

9. Verfahren nach einem der vorhergehenden Ansprüche, wobei die Schritte a) bis d) mehrmals unter Verwendung jeweiliger Paare von nicht kolokalisierten Sensoren (C0,C1; C0,C2; C0,C3) umgesetzt werden, wobei jedes Paar von Sensoren eine andere Orientierung (d1, d2, d3) aufweist.

10. Verfahren nach einem der vorhergehenden Ansprüche, das auch eine Messung der Temperatur der Struktur und die Verwendung des Resultats dieser Messung bei der Umsetzung von Schritt d) umfasst.

11. Verfahren nach einem der vorhergehenden Ansprüche, wobei das in Schritt a) erfasste Umgebungsgeräusch aufgezeichnet und zu einer von der Struktur entfernten Datenverarbeitungsvorrichtung übertragen wird, wobei die nachfolgenden Schritte des Verfahrens zeitversetzt von der Datenverarbeitungsvorrichtung umgesetzt werden.

12. Verfahren nach einem der vorhergehenden Ansprüche, wobei die Struktur balken-, rohr-, platten- oder schalenartig ist.

13. System zum Überwachen des Strukturzustands einer platten- oder schalenartigen Struktur (S), das Folgendes umfasst:

  - mindestens ein Paar von nicht kolokalisierten Sensoren für elastische Wellen (CA, CB) zur passiven Erfassung von sich in der Struktur ausbreitenden Umgebungsgeräuschen; und
  - eine Datenverarbeitungsvorrichtung (DTD), konfiguriert zum:
  - Empfangen eines für das erfasste Umgebungsgeräusch repräsentativen Signals von den Sensoren;
  - Schätzen, auf der Basis des von den Sensoren erfassten Umgebungsgeräuschs, einer Funktion, die für eine Impulsantwort der Struktur für die elastische Ausbreitung zwischen den das Paar bildenden Sensoren repräsentativ ist;
  **dadurch gekennzeichnet, dass** es ferner konfiguriert ist zum:

  - Extrahieren mindestens einer Dispersionskurve der elastischen Ausbreitung in der Struktur durch Zeit-Frequenz-Analyse der für eine Impulsantwort repräsentativen Funktion; und
  - Schätzen mindestens eines Parameters, der eine mechanische Eigenschaft eines die Struktur bildenden Materials anzeigt, auf der Basis der Dispersionskurve.

14. System nach Anspruch 13, wobei die Sensoren für elastische Wellen aus faseroptischen Bragg-Gitter-Sensoren, mikroelektromechanischen Beschleunigungsmessern und piezoelektrischen Sensoren ausgewählt sind.

15. System nach Anspruch 13 oder 14, das auch einen Temperatursensor (CT) umfasst und in dem die Datenverarbeitungsvorrichtung auch zum Verwenden eines von dem Sensor erfassten Temperaturmesswerts der Struktur konfiguriert ist, um den Parameter zu schätzen, der eine mechanische Eigenschaft eines die Struktur bildenden Materials anzeigt.

**Claims**

1. A method for monitoring the structural health of a structure (S) that supports guided propagation modes of elastic waves, implemented passively, comprising the following steps:

  a) acquiring an ambient noise propagating through the structure by means of at least one pair of non-collocated elastic-wave sensors (CA, CB);
  b) estimating, from the ambient noise acquired in step a), a function representative of an impulse response of the structure for elastic propagation between the constituent sensors of said pair;
  **characterised in that** it further comprises the following steps:

  c) extracting at least one dispersion curve of the elastic propagation in the structure by time-frequency analysis of the function representative of an impulse response obtained in step b); and
  d) estimating at least one parameter indicative of a mechanical property of a constituent material of the structure from the dispersion curve obtained in step c).

2. The method according to claim 1, wherein the elastic noise is acquired over a duration at least equal to the mixing time of the structure.

3. The method according to one of the preceding claims, wherein said step b) is implemented using a method chosen from:

  - calculation of the correlation of the elastic noise acquired by the sensors of the pair;
  - the passive-inverse-filter method; and
  - correlation of the coda of correlations.

4. The method according to one of the preceding claims, wherein said step c) comprises calculating the time-of-flight, between the sensors of the pair, of a plurality of elastic wave packets having different central frequencies.

5. The method according to one of the preceding claims, wherein said step d) is implemented using a method chosen from regression with respect to an analytical model of the dispersion curve and inversion of a numerical model.

6. The method according to one of the preceding claims, wherein step d) comprises estimating at least one modulus of elasticity of a constituent material of the structure, or a function of at least one such modulus.

7. The method according to one of the preceding claims, wherein step d) is implemented by an iterative method initialised with a value of said parameter at the start of the life of the structure.

8. The method according to one of the preceding claims, wherein steps a) to d) are implemented a plurality of times in the course of a period of use of the structure, the method also comprising the following steps:

   e) tracking the temporal variation in the parameter estimated in step d); and
   f) triggering an alarm when the tracking carried out in step e) indicates an ageing of the structure approaching a critical level.

9. The method according to one of the preceding claims, wherein steps a) to d) are implemented a plurality of times using respective pairs of non-collocated sensors (C0,C1; C0,C2; C0,C3), each pair of sensors having a different orientation (d1, d2, d3).

10. The method according to one of the preceding claims, also comprising a measurement of the temperature of the structure and the use of the result of this measurement in the implementation of step d).

11. The method according to one of the preceding claims, wherein the ambient noise acquired in step a) is recorded and transferred to a data-processing device that is remote from the structure, the following steps of the method being implemented in non-real time by said data-processing device.

12. The method according to one of the preceding claims, wherein said structure is of beam, tube, plate or shell type.

13. A system for monitoring the structural health of a structure (S) of plate or shell type, comprising:

   - at least one pair of non-collocated elastic-wave sensors (CA, CB) allowing an ambient noise propagating through the structure to be acquired passively; and
   - a data-processing device (DTD) configured to:
   - receive, from said sensors, a signal representative of the acquired ambient noise;
   - estimate, from the ambient noise acquired by said sensors, a function representative of an impulse response of the structure for the elastic propagation between the constituent sensors of said pair;
   **characterised in that** it is further configured to:

   - extract at least one dispersion curve of the elastic propagation through the structure by time-frequency analysis of said function representative of an impulse response; and
   - estimate at least one parameter indicative of a mechanical property of a constituent material of the structure from said dispersion curve.

14. The system according to claim 13, wherein said elastic-wave sensors are chosen from fibre-optic Bragg-grating sensors, microelectromechanical accelerometers and piezoelectric sensors.

15. The system according to either of claims 13 or 14, also comprising a temperature sensor (CT) and wherein said data-processing device is also configured to use a measurement of the temperature of the structure acquired by said sensor to estimate said parameter indicative of a mechanical property of a constituent material of the structure.

(a) ——⎡ Acquisition du bruit ambiant ⎤

(b) ——⎡ Estimation de la réponse
impulsionnelle ⎤

(c) ——⎡ Extraction d'une courbe de
dispersion ⎤

(d) ——⎡ Estimation d'un paramètre
mécanique ⎤

(e) ——⎡ Suivi de l'évolution temporelle ⎤

(f) ——⎡ Alerte ⎤

Fig.1

BM

JAC        B        DT

A

CA

CB

CT

Fig. 2

Fig 3

Fig 4

Fig 5A

Fig 5B

Fig. 6A

Fig 6B

Fig. 7A

Fig. 7B

Fig. 8

Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010079258 A1
- EP 2728348 A1
- WO 2015119498 A1
- WO 2015082292 A

**Littérature non-brevet citée dans la description**

- **L. AMBROZINSKI ; P. PACKO ; L. PIECZONKA ; T. STEPINSKI ; T. UHL ; W. J. STASZEWSKI.** Identification of material properties - efficient modelling approach based on guided wave propagation and spatial multiple signal classification. *Structural Control and Health Monitoring,* 2015, vol. 22 (7), 969-983
- Lamb Waves for Structural Health Monitoring in Viscoelastic Composite Materials. **M. CALOMFIRES-CU.** thèse de doctorat. Université de Brème, 2008
- **ERIC LAROSE ; PHILIPPE ROUX ; MICHEL CAMPILLO.** Reconstruction of Rayleigh-Lamb dispersion spectrum based on noise obtained from an air-jet forcing. *J. Acoust. Soc. Am.,* Décembre 2007, vol. 12 (6
- **R.L. WEAVER ; O.I. LOBKIS.** Ultrasonics without a source: Thermal fluctuation correlations at MHz frequencies. *Physical Review Letters,* 2001, vol. 87, 134301
- **T. GALLOT et al.** A passive inverse filter for Green's function retrieval. *J. Acoust. Soc. Am.,* Janvier 2012, vol. 131 (1
- **L. STHELY.** Reconstructing Green's function by corrélation of the coda of the corrélation (C3) of ambient seismic noise. *Journal Of Geophysical Research,* 2008, vol. 113, B11306
- **F. AUGER ; P. FLANDRIN ; Y.-T. LIN ; S. MCLAUGHLIN ; S. MEIGNEN ; T. OBERLIN ; H.-T. WU.** Time-Frequency Reassignment and Synchrosqueezing: An overview. *IEEE Signal Processing Magazine,* Novembre 2013, vol. 30 (6), 32-41
- **I. BARTOLI et al.** Modeling wave propagation in damped waveguides of arbitrary crosssection. *Journal of Sound and Vibration,* 2006, vol. 295, 685-707
- **E. PABISEK ; Z. WASZCZYSZYN.** Identification of thin elastic isotropic plate parameters applying Guided Wave Measurement and Artificial Neural Networks. *Mechanical Systems and Signal Processing,* 2015